Europäisches Patentamt

European Patent Office

Office européen des brevets

(19)

(11) Publication number : **0 636 861 A1**

(12) **EUROPEAN PATENT APPLICATION**

(21) Application number : 94305660.6

(22) Date of filing : 29.07.94

(51) Int. Cl.$^6$ : **G01C 19/72**, G02B 6/34, G02B 6/42

(30) Priority : 29.07.93 JP 208683/93
02.02.94 JP 31966/94

(43) Date of publication of application :
01.02.95 Bulletin 95/05

(84) Designated Contracting States :
DE FR GB

(71) Applicant : **SUMITOMO ELECTRIC INDUSTRIES, LIMITED**
5-33, Kitahama 4-chome
Chuo-ku
Osaka 541 (JP)

(72) Inventor : **Nishiura, Yozo, c/o Osaka Works of Sumimoto**
**Electric Industries Ltd.,**
**1-3 Shimaya 1-chome**
**Konohana-ku, Osaka (JP)**
Inventor : **Iwashita, Takaki, c/o Osaka Works of Sumimoto**
**Electric Industries Ltd.,**
**1-3 Shimaya 1-chome**
**Konohana-ku, Osaka (JP)**

(74) Representative : **Smith, Norman Ian et al**
**F.J. CLEVELAND & COMPANY**
**40-43 Chancery Lane**
**London WC2A 1JQ (GB)**

(54) Polarization selecting device, light source module and fiber-optic gyroscope.

(57)  A source-sensitive fiber-optic gyroscope is a novel, simplified gyroscope which demands a suitable, simplified, low-cost polarizer. A birefringent crystal having surfaces inclining at about 45 degrees to the anisotropic axis can spatially separates a beam into an ordinary beam with polarization perpendicular to the anisotropic axis and an extraordinary beam with polarization having a component of the anisotropic axis. A polarization selecting device is produced by facing ends of two optical fibers to both surfaces of a birefringent crystal. A beam emitted from a fiber is separated into an ordinary beam and an extraordinary beam. Either of them enters the core of the other beam as a propagating beam. A light source module is produced with a light emitting device, a birefringent crystal and an end of an optical fiber. The birefringent crystal divides a beam from the light source into an extraordinary ray and an ordinary ray. Either of them is introduced into the fiber. Thus the light source module emits linearly-polarized beams.

FIG.12

monitoring photodiode 46

refractive index distributing lens 42

optical fiber 44

45

superluminescent diode 41

SUS ferrule

47 receptacle

43

birefringent material (quartz)

40 lens holder

39 light source module

EP 0 636 861 A1

This application claims the priority of Japanese Patent Application No.208683/1993 filed July 29, 1993 and Japanese Patent Application No.031966/1994 filed February 2, 1994, which are incorporated herein by references.

This invention relates to a polarization selecting device, a light source module utilizing the polarization selecting device and a fiber-optic gyroscope making use of the light source module.

Here the polarization selecting device means a device of choosing the beams linearly polarized in a certain direction from the beams polarized randomly in all directions. In particular, a purpose of the invention is to provide a device of choosing the polarization of beams for coupling to an optical fiber.

A polarizer has been well known as a device for choosing the beams of the polarization in a certain direction. The polarizer converts the beams of any polarization into linearly-polarized beams by allowing the beams of the polarization in the selected direction and extinguishing the beams of the polarization perpendicular to the selected direction. The selected direction of polarization is now named a "transparency axis" of the polarizer. There are only the beams of polarized linearly in the selected direction at the back of the polarizer.

A polarization plate, a polarization prism, a fiber-type polarizer, or a metal-dielectric multilayer polarizer have been known as a polarizer. The latter two are suitable for a fiber-optic gyroscope.

The fiber-type polarizer is produced by winding a polarization maintaining fiber several turns around a bobbin. The bending causes anisotropy of the loss with regard to the birefringent axes. The light having a polarization in a direction attenuates by dissipating power due to the bending. The other light having another polarization perpendicular to the dissipating mode can travel the bending fiber without loss. The former is called dissipative mode. The latter is called propagating mode. The fiber-type polarizer is a device utilizing the dependence of the bending loss upon the polarization.

The metal-dielectric multilayer polarizer is a device produced by piling in turn metal thin films and dielectric films on a substrate. The light beams with a polarization perpendicular to the multilayers go through the device without significant loss. The other beams with a polarization parallel with the multilayers dissipate the energy in the device due to the eddy current induced in the metal films. The former is the propagating mode. The latter is the dissipating mode. Thus only the rays having the polarization perpendicular to the multilayers remain at the rear of the device. Thus the metal-dielectric multilayer acts as a polarizer.

An optical fiber gyroscope is a device which makes use of a polarizer. The optical fiber gyroscope measures angular velocity by dividing a beam in half, introducing the divided beams into ends of a sensor coil made of a single-mode fiber, letting the beams spread clockwise (CW) and counterclockwise (CCW) in the fiber coil, integrating the beams, letting the beams interfere with each other and detecting the power of the interfering beams by a photodetector. When the sensor coil is rotating, a phase difference occurs between the CCW beam and the CW beam due to the Sagnac effect. The phase difference is called Sagnac's phase shift. Sagnac's phase shift is in proportion to the angular velocity of the fiber coil (sensor coil). The power of the interfering beams depends on the Sagnac's phase difference. Thus the angular speed of the sensor coil can be deduced from the output of the photodetector.

The CCW propagating light and the CW propagating light must have the same polarization in order to interfere each other at the surface of the photodetector. A polarizer is used for equalizing the polarization of the two beams in the optical fiber gyroscope. If the polarization rotates in the sensor coil, the power of the interfering beams fluctuates irrespective of the angular velocity. Thus some improvement is required to kill the rotation of polarization in the sensor coil. Someone suggested an improvement which is entirely produced with a polarization maintaining fiber (PM fiber). Geometric anisotropy suppresses the rotation of polarization in the polarization maintaining fiber. However the polarization maintaining fiber is far more expensive than the ordinary single-mode (SM) fiber. Other improvement has been still requested for overcome the problem of the polarization rotation without a PM fiber. In any cases, a polarizer is interposed for equalizing the polarization of the CCW waves and the CW waves in optical fiber gyroscopes.

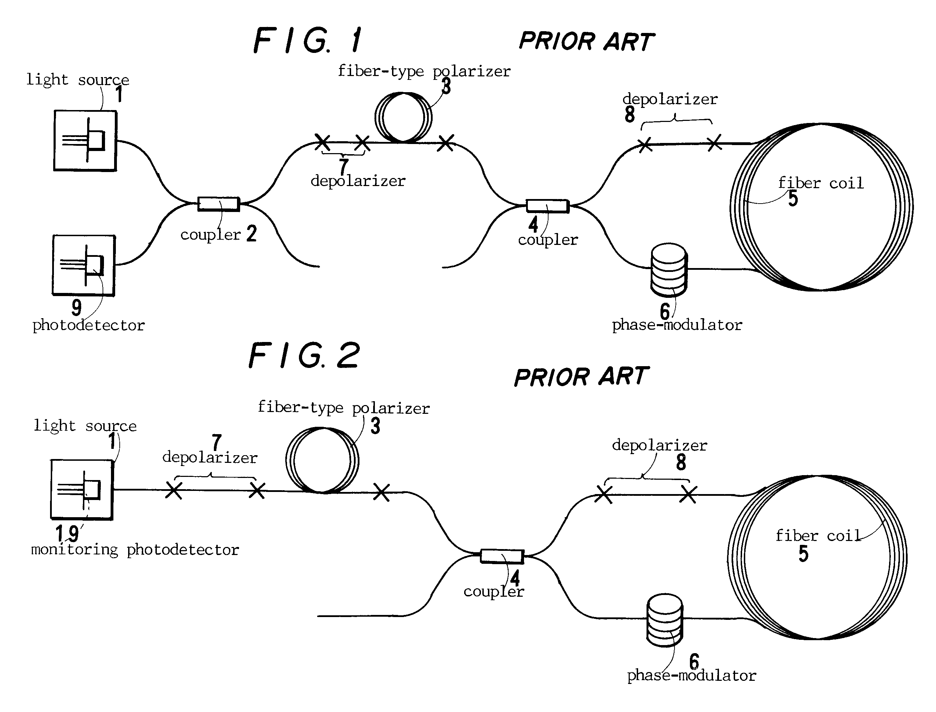

Prior gyroscope is explained by referring to Fig.1. A light source (1) emanates monochromatic light beams or quasimonochromatic light beams. The light source has a light emitting device and a photodetector for monitoring the power of the light emitting device (not shown in Fig.1). A light beam emitted from the light source (1) passes a first coupler (2) and a fiber-type polarizer (3). The beam becomes a linearly polarized beam. Then the beam is divided in half by a second coupler (4). The sub-beams go into the initial ends of the fiber coil (5) made from a single-mode fiber. A phase modulator (6) is equipped near one end of the sensor coil (5). The beams travel clockwise and counterclockwise in the sensor coil (5). The beams go out of the coil and are integrated by the coupler (4). The unified beams go through the polarizer (3) and the first coupler (2). Finally the beams attain a photodetector (9) installed at the final end of the fiber path. The CCW beam and the CW beam interfere at the photodetector (9). The photodetector senses the power of the interfering beams. When the fiber coil (5) is at rest, there is no phase difference between the CCW travelling waves and the CW travelling waves. When the sensor coil (5) is rotating, the rotation induces a phase difference (Sagnac's shift) in proportion to the angular velocity. The phase shift reduces the power of the interfering beams. The angular velocity of the fiber coil can be obtained from the decrease of the power of the interfering beams.

Therefore a light source (1), a photodetector (9) and a fiber coil (5) has been deemed to be indispensable for prior gyroscopes. In addition, the gyroscopes require a polarizer to arrange the polarization in the same direction. Two couplers must be installed in order to equalize the fiber paths of the CCW beam and the CW beam. The phase-modulation method demands also a phase-modulator.

However in the case of the gyroscope employing a sensor coil made with a single-mode fiber, the polarization of the light accidentally rotates in the fiber coil, since the single-mode fiber has no anisotropy which fixes the polarization in a certain direction. On the other hand, some birefringency is accidentally induced in a single-mode fiber by e.g. geometric asymmetry of a fiber occurring on fabrication, a bend of a fiber, external force or external magnetic field. The random birefringency sometimes induces the rotation of polarization in a single-mode fiber. The rotation of polarization causes the change of the optical path. Thus a phase difference occurs between the CW waves and the CCW waves, even when the sensor coil is at rest. This is a fluctuation of the zero point. This is called a "drift" or "drift of zero point".

Although the drift is induced by some grounds other than the polarization rotation, the rotation of polarization is now explained. As shown in Fig.1, a polarizer (3) was interposed between two couplers (2) and (4) in prior apparatuses. The polarizer aligns the polarization of the beam progressing to the sensor coil (5) and aligns also the polarization of the beam returning from the coil (5). The polarizer attempts to suppress the influence of the polarization rotation by aligning the polarization two-way. Fig.1 shows a general, prior gyroscope. The structure is called "minimum configuration", because the structure includes only the requisites except depolarizers (7) and (8). The photodetector (9) positioned at the final end of the fiber was indispensable. Depolarizers (7) and (8) are sometimes interposed in the paths in order to reduce the fluctuation of the output due to the rotation of polarization.

This Inventors have proposed an entirely new gyroscope shown in Fig.2 which can do without the photodetector (9) of Fig.1. The new apparatus has been suggested by Japanese Patent Application No.4-260662 (260662/'92) and Japanese Patent Application No.5-057756 (057756/'93). The gyroscope has eliminated the end photodetector positioned at the final end of the fiber path. The signal is obtained either from the driving current or voltage of the light emitting device, or from the photocurrent of the auxiliary photodetector for monitoring the power of the light emitting device. Travelling clockwise or counterclockwise in the sensor coil, the signal light returns the light source. The CCW light and the CW light interfer at the light source itself. The returning, interfering light modulates the light emitting device in the light source. Thus the power of the signal light (returning light) can be obtained either from the change of the driving current or driving voltage of the light emitting device or from the change of the photocurrent of the auxiliary, monitoring photodetector.

The omission of the end photodetector dispenses with the first coupler (2) which connected the end photodetector and the light source. Since an expensive fiber coupler raised the cost of prior gyroscope, the elimination of the coupler is very advantageous for reducing the cost of production. Namely the Inventors have proposed a new gyroscope which has the parts less than the "minimum configuration" for the first time.

In Fig.2, the light emitted from a light source (1) is converted into a linear polarization beam by a polarizer (3). The beam is divided in half by a coupler (4). The sub-beams propagate clockwise and counterclockwise in the fiber coil (5). The beams are phase-modulated by a phase-modulator (6) provided at an end of the sensor coil (5). The coupler (4) integrates the CCW spreading beam and the CW spreading beam. The polarizer (3) again aligns the polarization of the beams in the predetermined direction. The beams return to the light source (1) itself. The light source (1) has a light emitting device and a monitoring photodetector. The light emitting device is sensitive for the returning light and changes the performance of light emission as a function the returning light. The returning light beams vary the driving current of the light emitting device at a constant voltage, the driving voltage at a constant current or the emission power. The change of the emission power can be detected by the auxiliary, monitoring photodiode equipped in the light source module.

Such a gyroscope is entirely different from prior gyroscopes both in the structure and in the principle of measurement. The new gyroscope is now called "source-sensitive gyroscope" to distinguish from prior ones. A polarizer can be interposed in the source-sensitive gyroscope in order to equalizing the polarization. Further, depolarizers (7) and (8) can be installed in order to avoid the drift due to the rotation of polarization.

Interposition of a polarizer is useful also for the source-sensitive gyroscope for aligning the polarization of the CW rays and the CCW rays. The prior apparatus of Fig.1 had to insert the polarizer at a point of the fiber path between two couplers (2) and (4). Interposition in the fiber path restricts the types of the polarizer to a fiber-type polarizer and a metal-dielectric multilayer polarizer. Both polarizers are expensive parts due to the difficulty of production.

A fiber-type polarizer is produced by winding a polarization maintaining fiber around a bobbin. Owing to a great many of processes, the polarization maintaining fiber (PM fiber) is still several tens of times as expen-

EP 0 636 861 A1

sive as the ordinary single-mode fiber (SM fiber). The performance of the polarizer depends on the property of the PM fiber, since the bending induces the loss for the beam of the polarization in a certain direction. The extinction rate is influenced by the fluctuation of properties of PM fibers on fabrication. High cost and instability is the drawbacks of the fiber-type polarizer.

A metal-dielectric multilayer polarizer necessitates many processes for production, e.g. the formation of metal thin films and dielectric films in turn on a substrate, the slicing the substrate into chips, the polishing of the sides and surfaces. The great number of processes raises the cost of production.

The source-sensitive gyroscope of Fig.2 also requires a polarizer, if the polarization shall be predetermined two-way. Of course, the fiber-type polarizer or the metal-dielectric multilayer polarizer can be used in the simplified gyroscope. However the simplification of the apparatus may invite another simplification of the polarizer. One purpose of this invention is to provide a convenient polarization selecting device suitable for the simplified gyroscope. Another purpose of the invention is to provide a light source module including the polarizer. Another purpose is to provide an optical fiber gyroscope which is inexpensive and stable in function.

To achieve the foregoing objects and in accordance with the purpose of the invention, embodiments will be broadly described herein.

The polarization selecting device of the invention comprises a birefringent material interposed between a light source and an end of a fiber, wherein the birefringent material spatially divides separates the beam emitted from the light source into an ordinary beams and an extraordinary beam, and one of the ordinary beam or the extraordinary beam is exclusively introduced into the core of the fiber. The ordinary beam is a linear polarization beam with a certain direction (e.g. A-direction). The extraordinary beam is another linear polarization beam with a direction perpendicular to the ordinary beam (e.g. B-direction $A \perp B$). The two beams with different linear polarizations are spatially separated by the birefringent material. Then one beam is selected and is introduced into the core of the fiber. The birefringent material acts as a substantial polarizer.

Here the birefringency means not only the difference of phases between two linear polarizations perpendicular with each other, but also the difference of the paths therebetween. Rays are separated into ordinary rays and extraordinary rays by a birefringent crystal. The ordinary ray is a ray with the linear polarization perpendicular to an extraordinary principal axis of the crystal. The extraordinary ray is a ray with the other linear polarization having a component of the extraordinary principal axis of the crystal. Two rays make their own ways in a birefringent crystal. The paths are different for two beams. Namely the two beams are spatially separated in the direction vertical to the propagation.

It is important that the birefringent crystal divides the two beams vertically in this invention. Vertical separation characterizes this invention.

In usual, birefringency means the longitudinal separation in the direction of propagation due to the phase difference. This separation may be called axial separation. The difference of the direction of separation clearly distinguishes this invention from prior use of birefringency.

In the invention the ordinary beam and the extraordinary beam is vertically separated. The core of an optical fiber is narrow. If the vertical spacing between the ordinary ray and the extraordinary ray is wider than the diameter of the core, only one of the ordinary ray and the extraordinary ray can enter the core of the fiber. The other is excluded from the fiber. Both the ordinary ray and the extraordinary ray are linear polarization ray. A linear polarized ray enters the fiber. Thus the birefringent crystal substantially plays the role of a polarizer for the fiber. This birefringent material allows both polarization rays to pass through, because it is transparent both to the rays with perpendicular polarizations. But the two rays are vertically separated. Only one beam is selected to be introduced into a fiber. The other beam is not killed by the birefringent crystal but deviates from the core of the fiber. The birefringent crystal polarizer is different from ordinary polarizers in the structure and in the principle. Thus the birefringent device is now called a "quasipolarizer" or "polarization selecting device" to avoid confusion.

The invention will be more fully understood from the following description given by way of example only with reference to the several figures of the accompanying drawings in which ;

Fig.1 is a schematic view of prior optical fiber gyroscope with a photodetector at the final end of the fiber path.

Fig.2 is a schematic view of a source-sensitive gyroscope contrived by the Inventors (Japanese Patent Application No.4-260662 (260662/'92) and Japanese Patent Application NO.5-057756 (057756/'93)).

Fig.3(1) is a schematic view defining the coordinate system for calculating the path of the extraordinary ray in a birefringent crystal by Fermat's principle.

Fig.3(2) is a perspective view of the birefringent crystal, extraordinary ray, ordinary ray and the three-dimensional coordinate.

Fig.4 is an explanatory view demonstrating the spatial separation between an extraordinary ray and an ordinary ray in a birefringent crystal.

4

Fig.5 is an oblique view of a birefringent crystal which separates the ordinary beam and the extraordinary beam by birefringency.

Fig.6 is an schematic view of a quasipolarizer or polarization selecting device which separates the ordinary beam and the extraordinary beam and guides one of the beams into a core of an optical fiber.

Fig.7 is a view of a lens, a birefringent crystal and a fiber in which the ordinary beams enter.

Fig.8 is an explanatory view showing a parallel separation of the ordinary ray and the extraordinary ray by a birefringent crystal with crystal axes inclining the beam line.

Fig.9 is an explanatory view demonstrating a oblique, wider separation of the ordinary ray and the extraordinary ray by a birefringent crystal having a slanting surface.

Fig.10 is a schematic view of a source-sensitive optical fiber gyroscope making use of the quasipolarizer of this invention.

Fig.11 is a perspective view of an embodiment of the quasipolarizer or the polarization selecting device of this invention.

Fig.12 is a sectional view of an embodiment of a light source module of this invention.

Fig.13 is a schematic view of a source-sensitive optical fiber gyroscope making use of the light source module of this invention.

Fig.14 is a sectional view of another embodiment of the light source which adopts a birefringent ball lens for converging beams and for selecting a beam from two.

Fig.15 is a schematic view of a light source module of this invention.

Fig.16 is a sectional view of a light source module showing the paths of advancing beams.

Fig.17 is a sectional view of a light source module showing the paths of returning beams.

Fig.18(1) is a sectional view of a light source module demonstrating the advancing beams when the beam aperture is narrow.

Fig.18(2) is a sectional view of a light source module demonstrating the advancing beams when the beam aperture is wide.

Fig.19(1) is a sectional view of a light source module showing the advancing beams, when the light emitting device is fixed at the forefront of the stem.

Fig.19(2) is a sectional view of a light source module showing the advancing beams, when the light emitting device is fixed at the midway of the stem.

Fig.20 is a sectional view of a light source module showing the generation of stray rays by the scattering of the returning light at the periphery of a lens.

Fig.21 is a sectional view of a light source module having a pinhole plate between the light emitting device and the lens.

Fig.22 is a sectional view of a light source module having a pinhole plate between the light emitting device and the birefringent crystal.

Fig.23 is a sectional view of a light source module exhibiting how the beams emitted from the light source are converged by the lens to the core of a fiber.

Fig.24 is a sectional view of a light source module showing how the beams reflected on the end of the fiber are converged to the light emitting device by the lens.

Fig.25 is a sectional view of a light source module having a pinhole plate between the lens and the light emitting device.

Fig.26 is a sectional view of a light source module having a protection cap with a pinhole.

Fig.27 is a sectional view of a light source module having a selfoc lens with non-effective regions which are covered with paint.

The polarization selecting device or quasipolarizer of this invention comprises a birefringent crystal cut in pertinent planes and an optical fiber facing the birefringent crystal, wherein a light beam is introduced in the birefringent crystal, the birefringent crystal separate spatially an extraordinary beam which disobeys Snell's law and an ordinary beam which obeys Snell's law and either of the extraordinary beam and the ordinary beam is chosen to enter the core of the optical fiber.

The principle on which this invention is based is novel. This invention cannot be fully understood without complete consideration of the principle. Thus the principle is basically clarified first of all.

Birefringency is optical anisotropy appearing in crystals with low symmetry, e.g. uniaxial crystals or biaxial crystals. A uniaxial crystal has three crystallographical axes (optical principal axes at the same time) which meet at right angel with each other. One of the crystallographical axes is different in length from the other two axes. The unique axis is called an optically anisotropic axis, an anisotropic axis or an optical axis in brief in this description. The other two axes which are equal in length are called normal optical axes or normal axes.

A beam having the polarization having a component in the anisotropic axis is called an extraordinary ray disobeying Snell's law. Another beam having the polarization perpendicular to the anisotropic axis is called an ordinary ray. Clear definitions are given to the ordinary or extraordinary ray. The anisotropic axis is denoted by Z-axis. Other normal crystal axes are allocated with Y-direction and X-direction. The beam with the polarization including a Z-component is an extraordinary beam. The other beam with the polarization parallel with XY-plane is an ordinary beam. Vector K means the beam line of the light, i.e. the direction of propagation of light. "∥" is a symbol for signifying parallelism.

When the light enters the birefringent crystal in parallel with Z-axis (K ∥ Z), all beams including in the light become ordinary, since the beams have the polarizations perpendicular to anisotropic axis (Z-axis). Birefringency has no significance in the relation.

When the light enters the birefringent crystal in parallel with Y-axis (K ∥ Y), some beams have X-polarization and the other beams have Z-polarization. The former is ordinary and the latter is perfectly extraordinary. Otherwise, when the light enters the birefringent crystal in parallel with XY-plane (K ⊥ Z), some have Z-polarization and the other have X-polarization or Y-polarization. In these cases, the difference of the refractive indices brings about the phase difference between Z-polarization and Y-, X-polarization. But this is only a separation of phase or speed. No spatial separation occurs. Z-polarization beam, X-polarization beam and Y-polarization beam progress along the same path. The geometric relation of K ∥ X , K ∥ Y or K ∥ XY is the most common configuration which has been adopted in an external modulation device of light utilizing birefringent crystal, or in a depolarizer produced by gluing two birefringent crystals. Perhaps almost all devices making use of birefringency take the most commonplace configuration (K ∥ X , K ∥ Y or K ∥ XY).

This invention does not employ such a commonplace configuration. This invention adopts a quite novel configuration for separating two beams spatially (or vertically to K). Spatial separation requires a special configuration of birefringent crystal in this invention. The configuration may be too difficult to understand without geometrical and physical explanations.

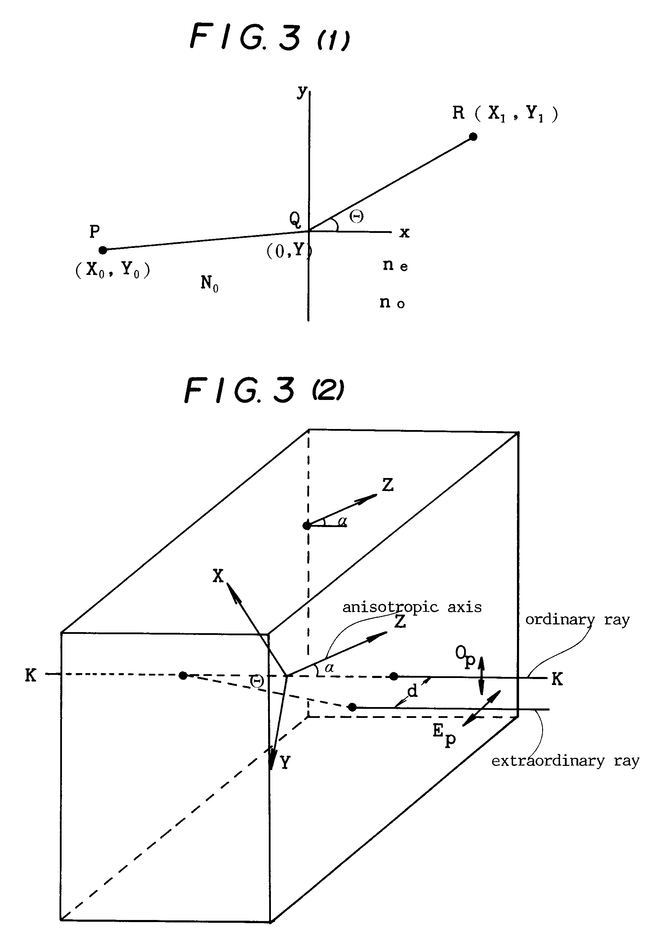

Fig.3(2) shows bluntly the configuration of the beam and the birefringent crystal of uniaxial anisotropy. X- and Y- axes are normal axes. Z-axis is the anisotropic axis. The surface has been cut at 45 degrees to the anisotropic axis (Z-axis). The light enters the crystal at right angle with the surface. But the anisotropic axis (or optical axis; Z-axis) inclines at 45 degrees to the surface. The beams are separated to the beams with the polarization having a Z-component and the beams with the polarization having no Z-component. The former beams with a Z-component are extraordinary. The latter beams without Z-component are ordinary. The two groups of the beams have of course different phase velocities.

What is important is that the paths are different for two groups of beams. The ordinary beams satisfy Snell's law. The incident angle is 0 degree (right angle incidence). Thus the ordinary beams progress along the same line KK, as shown in Fig.3(2). However the extraordinary rays disobey Snell's law which is the most important law ruling the refraction. The extraordinary rays bend at the interface by the birefringency despite the right angle incidence.

More rigorous proof is now requested. Instead of Snell's law, Fermat's principle gives the exact path of the extraordinary beams. In Fig.3(2), the propagation direction K is designated by a unit vector $(2^{-1}, 2^{-1}, 2^{-1/2})$ in the three dimensional coordinate defined in the crystal. This is a symmetric case with regard to X- and Y- directions. But the ratio of X-component and Y-component is arbitrary.

The polarization vector $O_p$ of the ordinary beam is $(2^{-1/2}, -2^{-1/2}, 0)$, which is determined by the conditions of no Z-component and the orthogonality to $K(2^{-1}, 2^{-1}, 2^{-1/2})$. The polarization vector $E_p$ of the extraordinary beam is $(-2^{-1}, -2^{-1}, 2^{-1/2})$, which is determined by the conditions of the orthogonality both to K and $O_p$. The unit vectors $O_p$, K and $E_p$ are written as;

$$\text{Polarization of ordinary beam} \qquad O_p (2^{-1/2}, -2^{-1/2}, 0) \quad (1)$$
$$\text{Propagation Direction (beam line)} \qquad K (2^{-1}, 2^{-1}, 2^{-1/2}) \quad (2)$$
$$\text{Polarization of extraordinary beam} \qquad E_p (-2^{-1}, -2^{-1}, 2^{-1/2}) \quad (3)$$

"$n_e$" is the refractive index of the extraordinary polarization (Z-polarization) in the crystal. "$n_o$" denotes the refractive index of the ordinary polarization (X-,Y-polarization). Z-axis is the anisotropic axis. For the beam with a general polarization vector (s,t,u), the refractive index N is given by

$$N = n_o s^2 + n_o t^2 + n_e u^2 \quad (4)$$

The ordinary ray enters straightly the crystal without bending, since the polarization has no Z-component (u=0). However the extraordinary ray has some Z-component in polarization vector $E_p$. In spite of the vertical incidence, the extraordinary ray bends by a little angle Θ in Z-direction. The initial ray K meets with Z-axis at π/4 radian (45 degrees). Thus the extraordinary ray inclines at (π/4 + Θ) to Z-axis within the crystal. The propagation direction K and the polarization vector $E_p$ vary in accordance with the bending. Extraordinary beam polarization $E_p(-2^{-1}-2^{-1}\Theta, -2^{-1}-2^{-1}\Theta, 2^{-1/2}-2^{-1/2}\Theta)$

The refractive index N for the extraordinary beam becomes,

$$N = n_o(2^{-1}+2^{-1}\Theta)^2 + n_o(2^{-1}+2^{-1}\Theta)^2 + n_e(2^{-1/2}-2^{-1/2}\Theta)^2$$

$$= 2^{-1}(n_e+n_o)+(n_o-n_e)\Theta = n_m+\Theta\Delta n \qquad (5)$$

where $n_m$ is an average of refractive indices ( $n_m=(n_e+n_o)/2$) and $\Delta n$ is the difference ($\Delta n=n_o-n_e$).

Eq.(5) means that an extraordinary ray feels the average refractive index $n_m$, when the ray meets with the anisotropic axis at 45 degrees ($\pi/4$). When the beam inclines further toward the anisotropic axis ($\Theta$ becomes negative) than 45 degrees, the extraordinary beam feels a refractive index nearer to $n_e$ than $n_m$. When the beam inclines further toward the isotropic axis than 45 degrees ($\Theta$ becomes positive), the extraordinary beam feels a refractive index nearer to $n_o$ than $n_m$. The rate of change is $(n_o-n_e)\Theta = \Theta\Delta n$.

However Eq.(5) is not a general expression of refractive index of extraordinary rays despite the apparent generality. If the inclination of the beam line to the anisotropic axis is not 45 degrees, the effective refractive index for extraordinary beams changes to another equation similar to Eq.(5). If the inclination angle of the beam to the anisotropic axis is $\phi$, $N = n_e\cos^2\phi + n_o\sin^2\phi$ in general from Eq.(4). If the beam line deviates from $\phi$ by $\Theta$, $N = n_e\cos^2\phi + n_o\sin^2\phi + \Theta (n_o-n_e)\sin2\phi$. This is a general equation of extraordinary refractive index of the inclination angle $\phi$ to the anisotropic axis and small fluctuation $\Theta$. But the following calculation will be done for $\phi=\pi/4$, because it brings the maximum path differences.

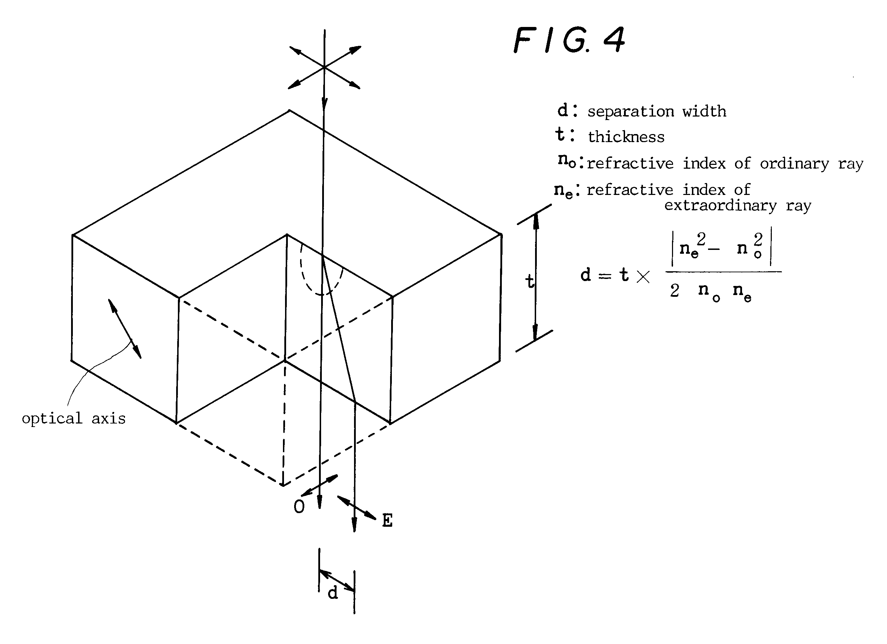

Fig.3(1), Fig.3(2) and Fig.4 show a relation between a beam and birefringence of a crystal. Snell's law does not hold for extraordinary rays. But the extraordinary rays obey Fermat's principle which is more general physical principle. Fermat's principle says that when a starting point and the end point are determined, light travels along a minimum optical path from the starting point to the end point. The optical path length is defined as the integration of refractive index with path. Fermat teaches us, "The actual path shall be the minimum path". When the medium has isotropic refractive index, Snell's law holds at the boundary. Snell's law can be deduced from Fermat's principle on the assumption of isotropic refractive index. But anisotropic refractive index breaks down Snell's law.

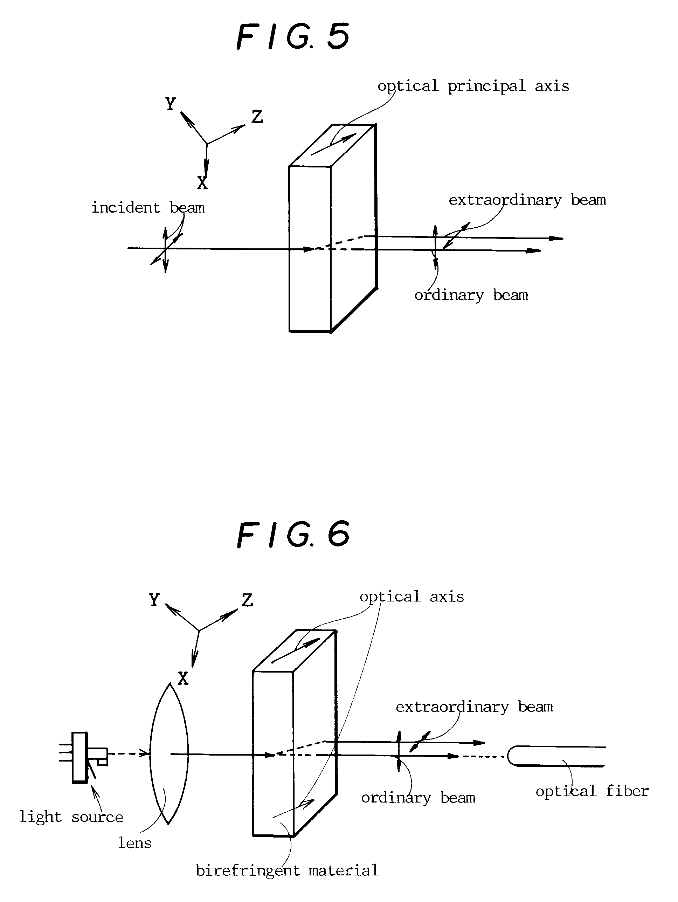

Fig.3(1) shows a simplified coordinate which is different from the coordinate in Fig.5 and Fig.6. The interface is yz-plane in Fig.3(1). $P(X_0,Y_0)$ is an initial point in vacuum whose refractive index is $N_0$. $R(X_1,Y_1)$ is a final point in an anisotropic medium whose extraordinary refractive index is $n_e$ and ordinary refractive index is $n_o$. The anisotropic axis meets at 45 degrees to the interface (yz-plane). The anisotropic axis can be described by the equation y=x. The polarization lies in xy-plane (parallel with paper). The polarization can be describes by the equation $y=-x\cot\Theta$. $Q(0,Y)$ is a bending point on the interface (yz-plane). A beam progresses from P via Q to R. PQ and QR are parts of straight lines. But PQR is not a part of a straight line. $\Theta$ is an inclination angle of PQ to x-axis. The optical path length L of PQR is

$$L= N_0\{X_0^2+(Y-Y_0)^2\}^{1/2} + \{2^{-1}(n_e+n_o)+(n_o-n_e)\Theta\}\{X_1^2+(Y-Y_1)^2\}^{1/2}$$

$$=N_0\{X_0^2+(Y-Y_0)^2\}^{1/2}+\{2^{-1}(n_e+n_o)+(n_o-n_e)(Y-Y_1)/X_1\}\{X_1^2+(Y-Y_1)^2\}^{1/2}$$

$$(6)$$

where $\Theta=(Y-Y_1)/X_1$ has been substituted. Y is a single variable. Fermat's principle declares that the minimum path is the actual path. Then L is differentiated with Y and the result shall be 0.

$$dL/dY = N_0(Y - Y_0)\{X_0^2 + (Y - Y_0)^2\}^{-1/2} + (Y - Y_1)\{2^{-1}(n_e + n_o) + (n_o - n_e)(Y - Y_1)/X_1\}\{X_1^2 + (Y - Y_1)^2\}^{-1/2}$$
$$+ \{X_1^2 + (Y - Y_1)^2\}^{1/2}(n_o - n_e)/X_1 = 0 \qquad (7)$$

Here $\Phi$ denotes the incident angle ($\tan\Phi = (Y_0-Y)/X_0$). Eq.(7) becomes

$$N_0\sin\Phi - \{2^{-1}(n_e + n_o) - (n_o - n_e)\tan\Theta\}\sin\Theta + \sec\Theta(n_o - n_e) = 0 \qquad (8)$$

Assuming $\Theta$ is very small, Eq.(8) is linearlized with $\Theta$. Then we obtain,

$$N_0\sin\Phi - \{2^{-1}(n_e + n_o) - (n_o - n_e)\Theta\}\Theta + (n_o - n_e) = 0 \qquad (9)$$

Further assuming that the incident beam enter the crystal at right angle, $\Phi = 0$. The resultant equation becomes a quadratic equation of $\Theta$. In the limit of a small $\Theta$, $\Theta$ is determined by

$$\Theta = 2(n_o - n_e)/(n_e + n_o) = \Delta n/n_m \qquad (10)$$

Here $\Delta n$ is the birefringence ($n_o-n_e$) and $n_m$ is the average ($n_o+n_e$)/2. Namely the extraordinary ray bends at an angle $\Theta$ of birefringence ($n_o-n_e$) divided by the average $n_m$ toward the anisotropic axis, although the ray has entered the crystal at right angle. Some textbook teaches the bending angle should be $(n_e^2-n_o^2)/2n_en_o$ (written on a side in Fig.4) which is equal to the quotient of the birefringence $\Delta$ n divided by the harmonic average. The quantity is similar to the estimation of Eq.(10). The Inventors think Eq.(10) is right.

In the configuration of Fig.3(2) and Fig.4, the birefringent crystal separated an extraordinary ray and an ordinary ray spatially. The ordinary beam goes straight into the crystal without bending the path. The extraordinary beam bends at the boundary at an angle $\Theta$. The paths are deviating from the incident point in the crystal. The deviation angle is $\Theta$. The extraordinary beam again bends by $-\Theta$ at the other interface. Thus the extraordinary beam after the rear surface is parallel with the incident beam. The deviation d between the extraordinary beam and the ordinary beam is a product of $\Theta$ and t which is the thickness of the crystal.

$$d = \Theta t = 2 t(n_o - n_e)/(n_e + n_o) = t\Delta n/n_m \quad (11)$$

The above calculation is based upon the assumption that the anisotropic axis inclines at 45 degrees to the surface of the crystal and the incident beam shoots the crystal surface orthogonally. This assumption is only an example for facilitating the understanding by simplifying the configuration. However this invention is not narrowly restricted within the assumed configuration of the vertical incidence and the 45 degree cut of crystal.

The scope of this invention is so far wide. As mentioned before, forbidden configurations are K ∥ Z, K ∥ X, K ∥ Y and K ∥ XY alone. "$\alpha$" denotes the slanting angle between the beam line K and the anisotropic axis Z in Fig.3(2). In the case of vertical (orthogonal) incidence, the forbidden four configurations are $\alpha = 0$, $\alpha=\pi/2$, $\alpha=\pi/2$ and $\alpha=\pi/2$ (90 degrees) respectively. Namely the forbidden configurations are only $\alpha=0$ and $\alpha=\pi/2$. The total range of the parameter $\alpha$ is from 0 to $\pi/2$, i.e. $0 \leqq \alpha \leqq \pi/2$. Since 0 and $\pi/2$ are forbidden, this invention is applicable to the wide range of $0 < \alpha < \pi/2$(90 degrees). The maximum separation is accomplished at $\alpha=\pi/4$ (45 degrees). The optimum range is $35° \leqq \alpha \leqq 55°$. The favorable range is $25° \leqq \alpha \leqq 65°$. The probable range is $5° \leqq \alpha \leqq 85°$ in this invention.

Of course, the orthogonal incidence is not a requisite for this invention. Slanting incidence is also available. The spatial separation between the extraordinary ray and the ordinary ray does occur also at the oblique incidence. Thus the slanting incidence is now considered. The surface of the crystal inclines to the beam line K. The incident angle $\Phi$ is not 0. $\Theta$ is the refraction (bending to x-axis in Fig.3(1)) angle of the extraordinary ray in the birefringent crystal. $\Phi$ is an incident angle. $\Theta_0$ is a refraction angle of the ordinary ray. Snell's law rules the refraction of ordinary rays.

$$N_0\sin\Phi = n_o\sin\Theta_o \quad (12)$$

The extraordinary ray obeys Eq.(8) of Fermat's principle in the case of $\alpha=45°$. Substitution of Eq.(12) into Eq.(8) results in

$$n_0\sin\Theta_o - \{2^{-1}(n_e + n_o) - (n_o - n_e)\tan\Theta\} \sin\Theta + \sec\Theta(n_o - n_e) = 0 \quad (13)$$

This is a general, exact expression for describing the relation between the refraction angle $\Theta_o$ of ordinary ray and the refraction angle $\Theta$ of extraordinary ray. However the complexity impedes an intuitive understanding. Assuming $\Theta$ is small, Eq.(13) is linearlized into

$$n_0\sin\Theta_o - n_m\sin\Theta + \sec\Theta \Delta n = 0 \quad (14)$$

Further for small $\Theta$,

$$\Theta - \Theta_o = \Delta n/n_m \quad (15)$$

Eq.(15) is consistent with Eq.(10). Eq.(15) means that the difference between the refraction angle of ordinary ray and the refraction angle of extraordinary ray is constant within a scope of inclination of the crystal to the beam line K. The condition of $\alpha = 45°$ is required now. Namely the crystal is revolved around its anisotropic axis. When $\Theta,\Phi$ and $\Theta$ are not small, Eqs.(8), (12) and (13) give exact relation. Then the difference $(\Theta - \Theta_o)$ becomes more than $\Delta n/n_m$. The bigger $(\Theta - \Theta_o)$ enlarges the path difference. This is a advantage of inclining the crystal to the beam line.

The inclination of crystal to the beam line has another advantage of prolonging the substantial path length (thickness) in the crystal. $\Psi$ designates the inclination angle of the crystal. The substantial thickness becomes t sec $\Psi$. The separation of two rays increases to

$$d = t\Delta n\sec\Psi/n_m \quad (16)$$

Till now, it has been assumed that the inclination angle $\alpha$ between the beam line K and the anisotropic Z-axis is $45°$ ($\pi/4$). As mentioned already, this invention is applicable to all $\alpha$ in the range of $0 < \alpha < \pi/2$. General theory will be established. For general inclination $\alpha$, the polarization $O_p$ of ordinary ray, the beam line K and the polarization $E_p$ of extraordinary ray are

$$\text{ordinary ray polarization } O_p \quad (2^{-1/2}, -2^{-1/2}, 0) \quad (17)$$

$$\text{beam line K} \quad (2^{-1/2}\sin\alpha, 2^{-1/2}\sin\alpha, \cos\alpha) \quad (18)$$

$$\text{extraordinary ray polarization } E_p \quad (-2^{-1/2}\cos\alpha, -2^{-1/2}\cos\alpha, \sin\alpha) \quad (19)$$

Then the refractive index N for an extraordinary ray becomes

$$N = n_o(2^{-1/2}\cos\alpha)^2 + n_o(2^{-1/2}\cos\alpha)^2 + n_e(\sin\alpha)^2$$

$$= n_o\cos^2\alpha + n_e\sin^2\alpha = n_m + \Delta n \cos2\alpha /2 \qquad (20)$$

At first, the orthogonal incidence is considered for general $\alpha$. Then $\alpha$ is the inclination angle between the normal of the surface and the anisotropic axis(Z-axis). The ordinary ray meets with Z-axis at $\alpha$ but does not bend at the interface because of the orthogonal incidence. But the extraordinary ray meets with Z-axis at $\alpha + \Theta$ in which $\Theta$ is the refraction angle. Then the polarization dependent-refractive index N is given by

$$N = n_m + \Delta n \cos2\alpha/2 - \Theta \Delta n \sin2\alpha \qquad (21)$$

Substituting Eq.(21) into Fermat's equation, differentiating with $\Theta$ and equalizing the result to 0, we obtain the bending angle $\Theta$ instead of Eq.(10)

$$\Theta = \Delta n \sin2\alpha/n_k \qquad (22)$$

where

$$n_k = n_o\cos^2\alpha + n_e\sin^2\alpha = n_m + \Delta n \cos2\alpha/2 \qquad (23)$$

$n_k$ is an average index similar to $n_m$, but a correction term $\Delta n\cos2\alpha/2$ is included.

Secondly, a slanting incidence is considered. The refraction angel $\Theta_o$ of an ordinary ray and the refraction angle $\Theta$ of an extraordinary ray satisfy

$$\Theta - \Theta_o = \Delta n \sin2\alpha/n_k \qquad (24)$$

This is a general expression of the difference of refraction angles. The distance d at the final end of the crystal with a thickness t is the product of t and $(\Theta-\Theta_o)$.

$$d = t\Delta n \sin2\alpha/n_k = |(n_e - n_o)| t \sin2\alpha/n_k \qquad (25)$$

"$D_f$" denotes the diameter of the core of a fiber. If $D_f < d$, both of the extraordinary ray and the ordinary ray cannot go into the core simultaneously. Only one beam can enter the core and propagate in the fiber. The other is abandoned out of the core. The ordinary beam is a linearly polarized beam with the polarization perpendicular to Z-axis. The extraordinary ray is also a linearly polarized beam with the polarization perpendicular to the ordinary polarization. Then the narrow core can select the polarization. If the parameters satisfy the inequality

$$|(n_e - n_o)| t \sin2\alpha/n_k > D_f \qquad (26)$$

the extraordinary ray and the ordinary ray can be selected by a core of a fiber. $\alpha = 45°$ gives the biggest separation. But other angles of $\alpha$ are also available. In practice, $\alpha$ is required from 25 degrees to 65 degrees. Long thickness t or narrow diameter $D_f$ will compensate the deficiency of $\sin2\alpha$.

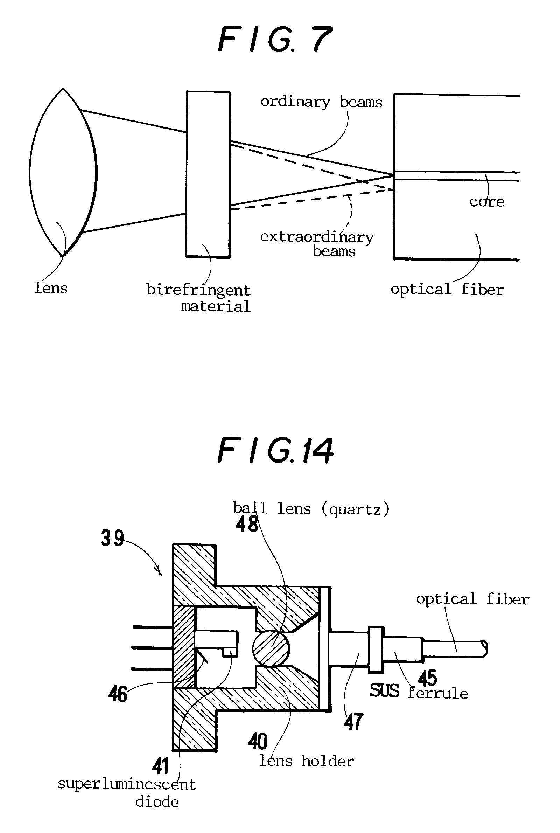

The above explanation clarifies the spatial separation to an ordinary ray and an extraordinary ray by a birefringent crystal whose anisotropic axis is slanting to the beam line, as shown in Fig.5, Fig.6 and Fig.7. Fig.5 demonstrates the basic principle of the spatial separation on which this invention is based upon. Two linear polarization beams are generated by the birefringent crystal. Fig.6 shows a module of a light source, a lens and a fiber besides the birefringent crystal. The fiber core chooses the ordinary ray in the example as the propagation light. The extraordinary ray deviates from the fiber. Fig.7 exhibits the convergence of the beams on an end of a fiber by a lens. Both beams reach the end of the fiber. But either one of the two goes into the core.

In the case of a single-mode fiber, the core has a diameter from 5 μm to 10 μm. Thus if the separation d is more than 10 μm, the fiber can select only one beam of the two. The ordinary beam has the linear polarization perpendicular to Z-axis. The extraordinary beam has the other linear polarization perpendicular to the ordinary polarization. Thus the selected beam is a linearly-polarized beam. Therefore the birefringent crystal and the fiber play the substantial role of a polarizer.

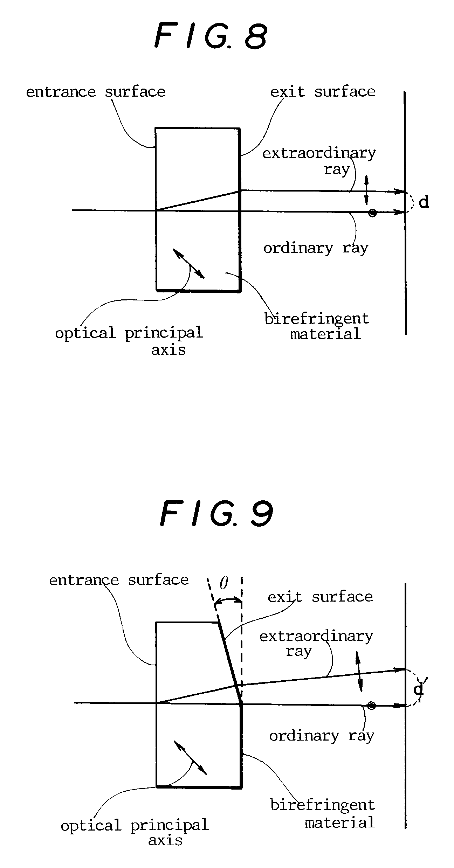

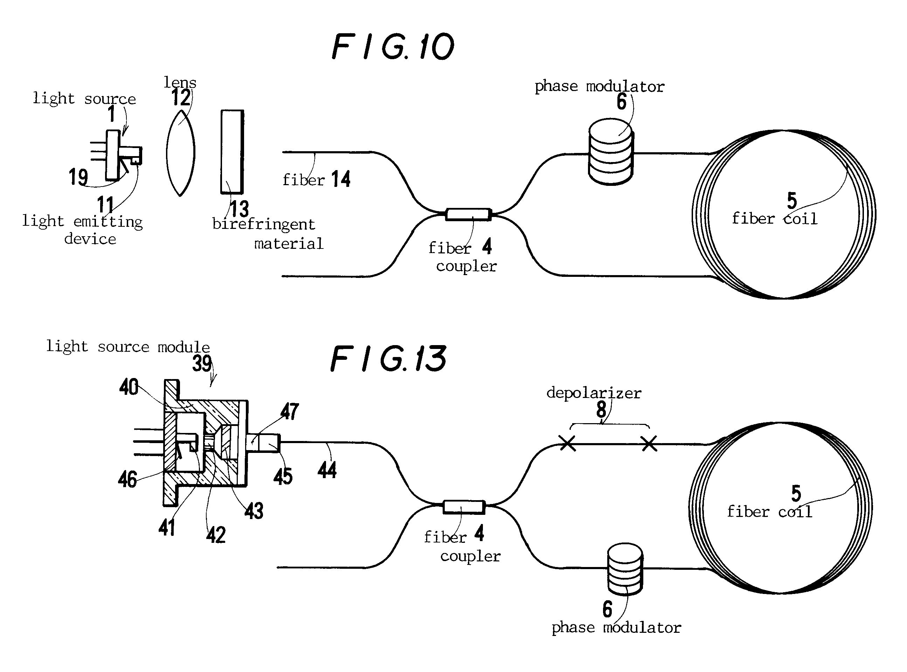

Fig.8 shows the same function of the birefringent crystal. "d" is the vertical separation of two beams. Fig.9 shows a version having a slanting exit surface. The refraction at the exit surface further separates the extraordinary ray from the ordinary ray by the slanting.

However there are some differences between the conventional polarizer and the device proposed by this invention. Prior device selects only one polarization beam and kills the other polarization beam. The other beam dies away. No component of the unselected beam remains at the rear side of the polarizer. There is only the selected beam at the back of the polarizer. There is no spatial distribution behind the device. Thus wide beams can be treated by prior ones. On the contrary, the device of the invention allows two beams to go through. There is the unselected beam behind the device. The spatial distribution of beams is important. Wide beams cannot be treated by this invention. This invention is useful for a narrow beam whose diameter is smaller than the core of a fiber. Then the device can be called a "quasipolarizer" or "polarization selecting device".

The most conspicuous advantage of the quasipolarizer is the low cost of production. The device can easily be made by cutting a birefringent crystal and mounting it in a pertinent position. The production requires no difficult process unlike fiber-type polarizers or metal-dielectric multilayer polarizers. This invention affords a freedom of mounting to a polarizer. This quasipolarizer can be equipped at a free space, e.g. in the gap between a light source and a fiber end. This is a convenient property for the source-sensitive gyroscope.

The birefringent device of the invention can be applied to a polarization selecting device, a light source module and a fiber-optic gyroscope. Fig.5, Fig.8 and Fig.9 are schematic views of a polarization selecting device which separates an incident beam into an extraordinary beam and an ordinary beam by a birefringent crystal whose anisotropic (optical principal) axis is oblique to the beam line.

Fig.6 shows a basic component of a light source module which positions an optical fiber either along the extraordinary beam line or along the ordinary beam line.

The choice of the paths is reversible. If light beam returns to the initial end of the fiber by some reasons, e.g. reflection or coil propagation, the returning beam passes the same path in the reverse direction. The reciprocality is one of the properties of the quasipolarizer. Thus the beams are twice linearly polarized, if the beams return.

The birefringent material of this invention shall be a uniaxial crystals which is transparent to the light and has great birefringency with little fluctuation by temperature. For example, optical crystals of quartz, $LiNbO_3$, KDP, $TiO_2$, calcite etc. are preferable for the birefringent crystal. Quartz is the most stable and most ample material among them. Preferably the crystal should be cut at 45 degrees to the anisotropic axis. However a cut other than 45 degrees is also useful, as explained before. Since the cut angle $\alpha$ is included as $\sin 2\alpha$, an $\alpha$ between 25° and 65° has a practical significance. Another $\alpha$ between 5° and 85° can be also employed in the invention.

Quartz has $n_o$=1.548 and $n_e$=1.539 for the light of the wavelength 800 nm. The birefringency $\Delta n$=0.009 and average $n_m$ =1.543. The deviation angle $\Theta$ is 0.006 radian. For example, when the thickness t of the quartz is 3 mm, the spatial separation d is 18 μm.

Single-mode fibers for a 800 nm wavelength have a core-cladding refractive index difference of 0.3 % to 0.5% and have a core diameter $D_f$ of about 5 μm. Thus d=18 μm and $D_f$=5 μm. $D_f$ < d. Therefore only one of the extraordinary ray and the ordinary ray can be introduced into the core of the fiber.

Fig.10 shows an optical fiber gyroscope adopting the quasipolarizer or the light source module of this invention. This is an improvement of the source-sensitive gyroscope in Fig.2. The gyroscope comprises a light source (1), a lens (12), a birefringent material (13), a fiber path (14), a coupler (4), a fiber coil (5) and a phase modulator (6). The light source (1) has a light emitting device (11) and a monitoring photodiode (19). The light emitting device (11) chip is mounted at a forefront of a stem on a package. The monitoring photodiode is fixed at the bottom end of the stem for receiving the rear emitted beams from the light emitting device (11). $D_a$ is the thickness of the active layer of the light emitting device. Separation d must be bigger than the core diameter $D_f$ and the active layer thickness $D_a$ (d > $D_f$,$D_a$). The light emitting device is either a laser diode or a superluminescent diode. The light emitting device (11) emanates monochromatic or quasimonochromatic light beams. The lens (12) converges the beams to the core of the single mode fiber (14). The birefringent material (13) whose anisotropic axis inclines to the beam line separates extraordinary beams and ordinary beams spatially. One beam of either of them enters the fiber. This is linearly polarized. The beam is divided in half by the coupler (4). The sub-beams propagate clockwise and counterclockwise in the sensor coil (5). The phase modulator (6) affords the beams the phase-modulation. The CCW and CW beams are unified at the coupler (4). The beams pass the birefringent material (13). The beams with the same polarization chosen by the device (13) can reach the active layer of the light emitting device (11) . The CCW beams and CW beams with the same polarization attain the light emitting device and interfere each other. The interfering beams modulate the light emitting device. The driving current, driving voltage or output power of the device (11) varies. The change of the output power can be detected by the monitoring photodiode (19). Thus the power of the interfering signal light can be detected by the driving current, driving voltage of the light emitting device (11) or the photocurrent of the monitoring photodiode (19).

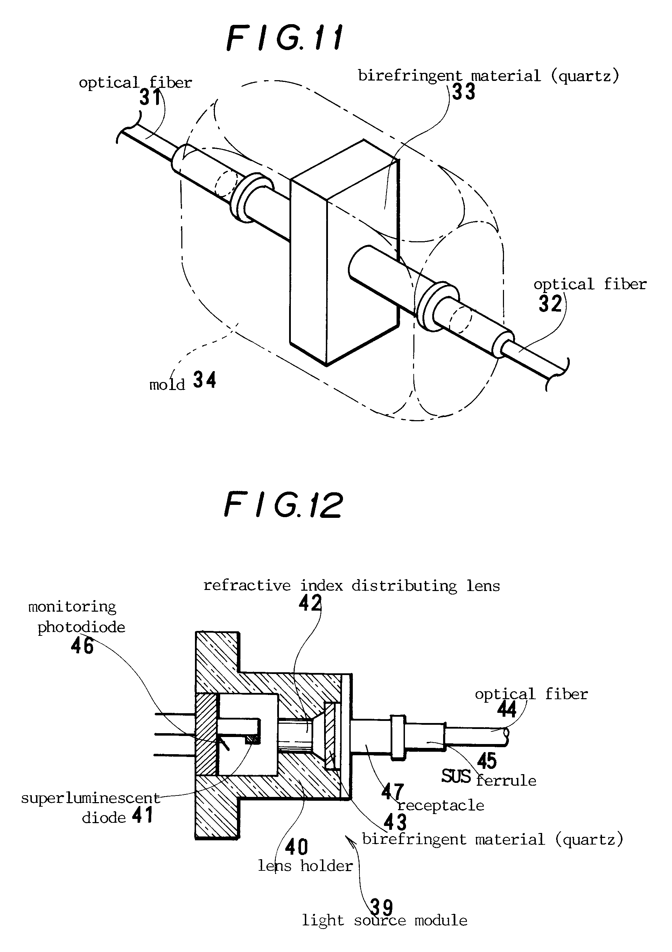

Fig.11 is a perspective view of a fiber-type quasipolarizer. Optical fibers (31) and (32) have ferrules at their ends. Two receptacles sandwich a birefringent crystal (e.g. quartz) (33). The ferrules are inserted into the receptacle. The anisotropic axis inclines at 25 degrees to 65 degrees to the light beam. The radial positions of the fibers have been determined by the receptacle so as to introduce only one of the extraordinary beam or the ordinary beam into the core exclusively. The fiber ends face to the surface of the birefringent crystal (33). Then all parts are unified by molding (34). The device acts as a polarizer by choosing the polarization of beams which propagate in the succeeding fibers. The quasipolarizer of Fig.11 is less expensive than the fiber-type polarizer a or the metal-dielectric multilayer polarizer.

Fig.12 shows an application to a light source module (39). The module comprises a lens holder (40), a superluminescent diode (41), a refractive index distributing lens (42) (selfoc lens), a birefringent crystal (or quasipolarizer e.g. quartz) (43), an optical fiber (44), a SUS ferrule (45), a receptacle (47), and a monitoring photodiode (46). The lens holder (40) supports the parts of the module. The fiber (44) can be detached or attached to the receptacle (47) with the ferrule (45). The superluminescent diode emits light beams in bilateral directions. The front beams go out of the module (39). The rear beams enter the monitoring photodiode (46). The birefringent crystal is cut so as to incline the anisotropic axis to the surface at 25 degrees to 65 degrees. One of the ordinary beam or the extraordinary beam is exclusively guided into the core of the fiber by the birefringent crystal (43).

Fig.13 shows a source-sensitive optical fiber gyroscope adopting the light source module of Fig.12. This is similar to Fig.10. The discrete parts in Fig.10 are integrated in the light source module (39). A depolarizer (8) is interposed at an end of the fiber coil (5). The depolarizer (8) depolarizes the light in order to admit half of beams to pass the quasipolarizer (43) in the reverse direction.

Fig.14 is another embodiment of a light source module. A ball lens (48) is made from birefringent crystal (e.g. quartz). The ball lens (48) converges beams and chooses the polarization of the beams. The ball lens plays two roles.

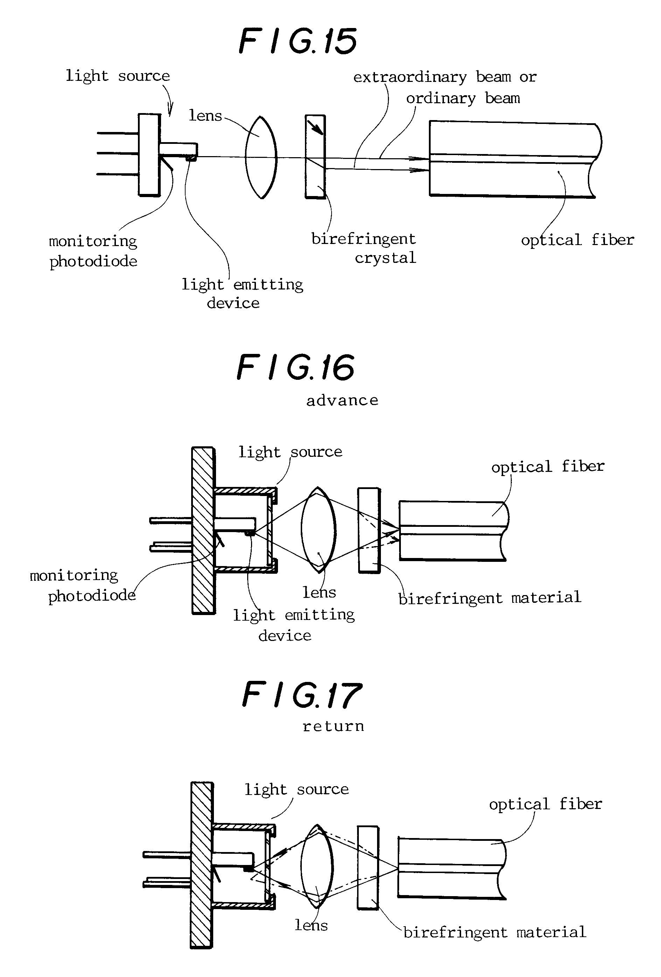

Fig.15 is a basic structure of a light source module of this invention. The positions of the lens and the birefringent crystal can be changed. The extraordinary beam can also be selected.

Fig.16 demonstrates how the beams advance in the light source module. The solid line shows the selected beams. The dotted line denotes the unselected beams which shoot a non-core part on the end of the fiber.

Fig.17 exhibits how the beams return to the light source. The selected solid line beams return exactly to the light emitting device. But the unselected dotted line beams converge at a point deviated from the light emitting device.

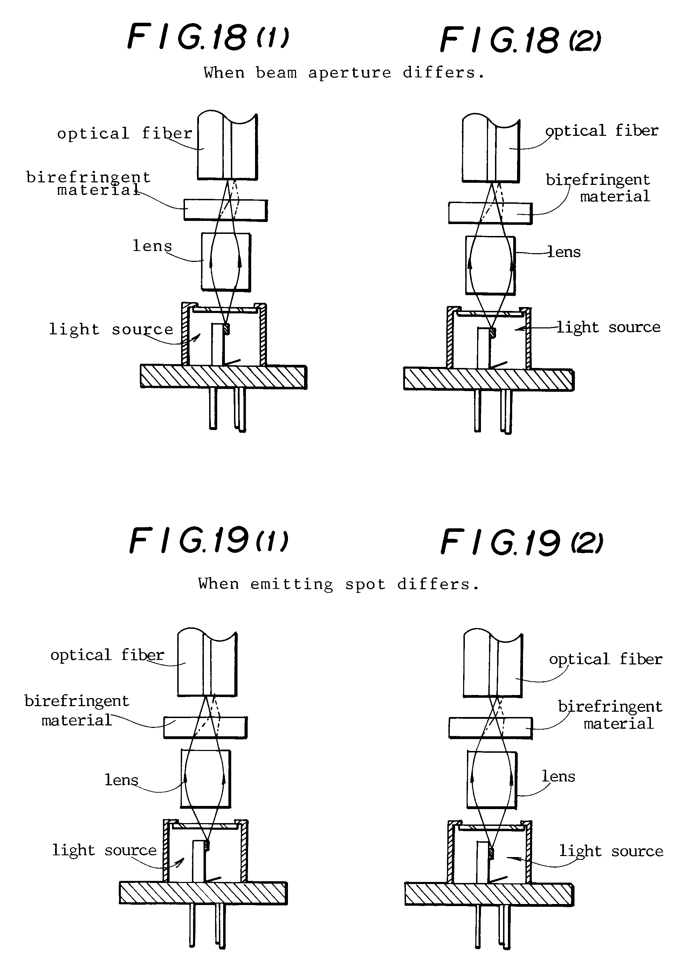

Fig.18(1) shows the case of a pertinent aperture of the beams. The beams go through the central part (effective part) of the lens. There is no problem.

Fig.18(2) shows the case of a too wide aperture of the beams. Parts of beams go through the peripheral part (non-effective part) of the lens. The wide aperture causes aberration of the lens.

Fig.19(1) shows the normal positioning of the light emitting device on the stem. The beams are converged just on the end of the fiber.

Fig.19(2) shows the abnormal positioning of the light emitting device on the stem. The chip deviates from the normal spot toward the bottom. The beams are converged at a point in front of the end of the fiber. Parts of beams pass the non-effective peripheral part of the lens, which invites abberation.

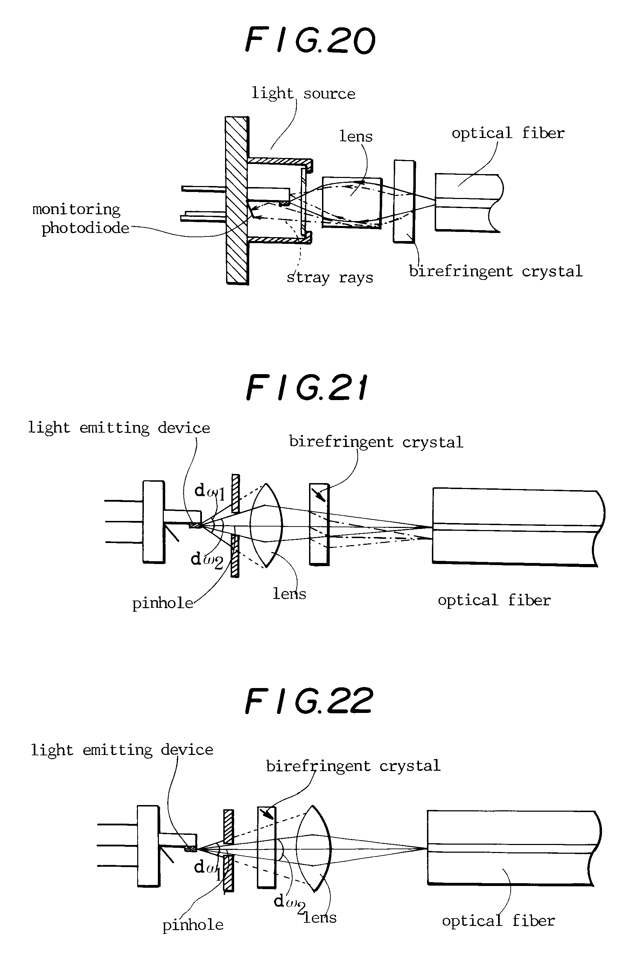

Fig.20 shows the returning paths emitted from the fiber end. The solid line beams go back to the light emitting device exactly. The other beams of single-dotted lines go through the peripheral parts of the lens. They make a focal image at a point deviating from the light emitting device. The peripheral parts sometimes scatter beams randomly owing to the fluctuation of the refractive index. The beams scattered are called stray rays. The stray rays shoot the stem or the inner wall of the cap. Some of the reflected stray rays reach the monitoring photodiode. The stray rays induce noise in the monitoring photodiode.

A common problem among Fig.18(2), Fig.19(2) and Fig.20 is the beams passing the peripheral parts of the lens. The problem can be overcome by interposing a pinhole plate in the optical path. The pinhole plate is an opaque plate having a pinhole.

Fig.21 shows an improvement for solving the problem. The light source module arranges a light emitting device, a pinhole plate, a lens and a fiber in this order. "$d\omega_1$" is the solid angle of a cone projecting from the center of the emanating region to the effective surface. "$d\omega_2$" is the solid angle of a cone projecting from the center of the emanating region to the pinhole. $d\omega_1 > d\omega_2$ is the condition for the size of the pinhole. The pinhole shields the peripheral beams. Thus no beams pass the peripheral, aberrant part of the lens.

Fig.22 shows another improvement. The lens and the pinhole plate are exchanged. This case also demands $d\omega_1 > d\omega_2$.

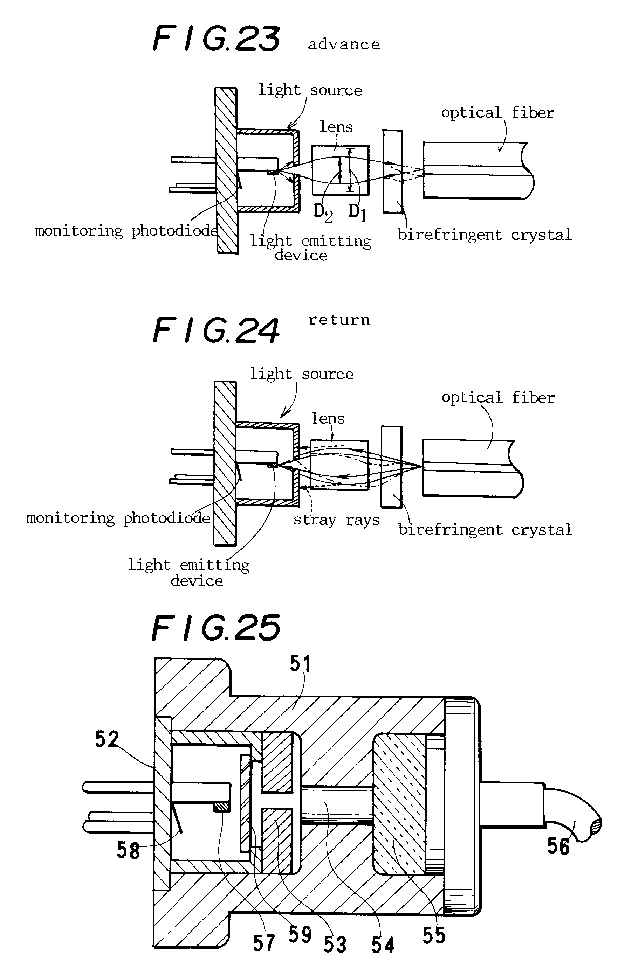

Fig.23 explains the effect of the pinhole plate. This example adopts the cap of the package as a pinhole plate. The hole of the cap is the pinhole for confining the aperture of the beams. $D_1$ is the effective diameter of the lens. The practical beams has a narrow diameter $D_2$ in the lens by the pinhole plate. Then $D_1 > D_2$. No beams go through the non-effective parts of the lens which would induce aberration or stray beams. The pinhole plate restricts the beam width. No aberration nor stray beam occurs.

Fig.24 demonstrates the function of the pinhole plate upon the returning beams. Some parts of the returning beams may pass the peripheral parts of the lens and may yield stray rays, since no pinhole plate exists near the fiber end. However the pinhole plate (i.e. cap in the example) cuts off the stray rays. Furthermore, it is preferable to cover at least a part which is exposed to the emanating point of the light emitting device with antireflection coating. Even when part of returning beams go into the cap, the beams do not shoot the emanating spot, since the beams are not reflected by the inner wall.

Fig.25 shows an example of a light source module having a pinhole plate between a lens (54) and a light source. A lens holder (51) supports a superluminescent diode package (52), a pinhole plate (53), a refractive index distributing lens (cylindrical lens) (54), a birefringent crystal (quartz, $TiO_2$ etc.) (55), a ferrule and an optical fiber (56) in this order. The diode package (52) has a superluminescent diode chip (57) and a monitoring photodiode (58), a stem, pins and a cap with a window (59). The pinhole plate (53) suppresses the dispersion of the beams which enter the lens (54).

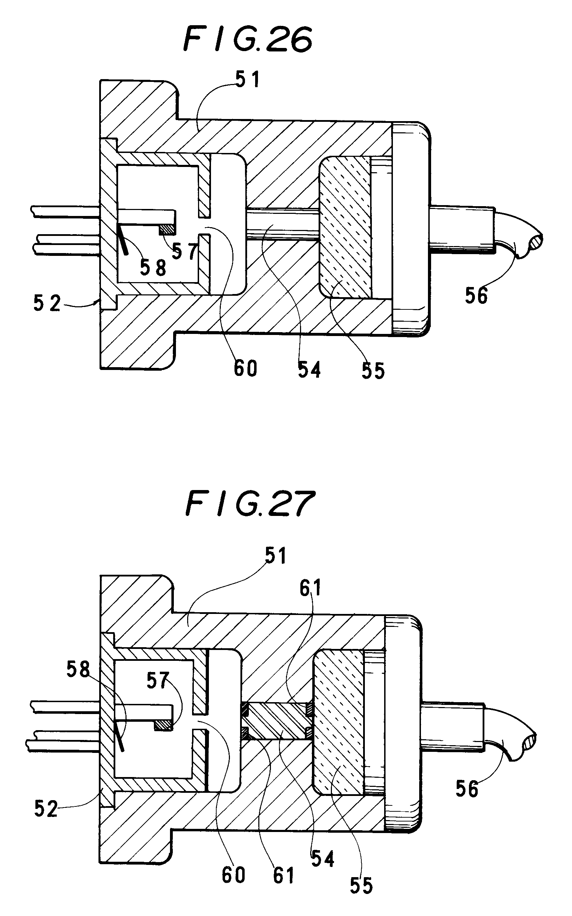

Fig.26 exhibits another example in which a cap plays the role of the pinhole plate. A lens holder (51) contains a superluminescent diode package (52), a columnar lens (refractive index distributing lens) (54), a birefringent plate (55), a ferrule and an optical fiber (56) in this order. The pinhole plate has been eliminated. A small window (60) of the cap confines the beam dispersion as a pinhole.

Fig. 27 shows a further example in which a non-effective, peripheral part of a lens is covered with an opaque material. A paint mask(61) is painted around the peripheries at the front end and the rear end of the lens (54). The paint is e.g. acryl resin paint. Otherwise, opaque rings are fitted on both ends of the columnar lens (54) to prevent light from passing the peripheries of the lens.

Further, an antireflection coating on the inner wall of the caps of the light sources is also useful for the examples of Fig.25 to Fig.27. The light source module becomes an important part of the source-sensitive optical fiber gyroscope, as shown in Fig.13 or Fig. 10.

## Claims

1.  A polarization selecting device comprising a first optical fiber with a core, a birefringent crystal having an entrance surface facing the first optical fiber, an exit surface, and an anisotropic axis which is neither perpendicular to nor parallel with the entrance surface, a second optical fiber with a core facing the exit surface of the birefringent crystal and a holding device supporting the first optical fiber, the birefringent crystal and the second optical fiber along a line, wherein the birefringent crystal spatially separates a light beam from the first optical fiber into an ordinary beam with polarization perpendicular to the anisotropic axis and an extraordinary beam with polarization including a component of the anisotropic axis and the second optical fiber receives either of the ordinary beam and the extraordinary beam into the core as a propagating beam.

2.  A polarization selecting device as claimed in claim 1, wherein the inclination angle $\alpha$ of the anisotropic axis to the entrance surface is between 25 degrees and 65 degrees, and a thickness t of the birefringent crystal, a refractive index $n_o$ of ordinary ray, a refractive index $n_e$ of extraordinary ray and a core diameter $D_f$ of the fibers satisfy an inequality $|(n_e-n_o)| t \sin 2\alpha / n_k > D_f$, where $n_k = n_o \cos^2\alpha + n_e \sin^2\alpha$.

3.  A polarization selecting device as claimed in claim 2, wherein the birefringent crystal is quartz, $LiNbO_3$, KDP, $TiO_2$ or calcite.

4.  A polarization selecting device as claimed in claim 2, wherein the inclination angel $\alpha$ is an angle from 35 degrees to 55 degrees.

5.  A light source module comprising a light emitting device, a birefringent crystal having an entrance surface facing the light emitting device, an exit surface, and an anisotropic axis which is neither perpendicular to nor parallel with the entrance surface, an optical fiber with a core facing the exit surface of the birefringent crystal and a holding device supporting the light emitting device, the birefringent crystal and the optical fiber along a line, wherein the birefringent crystal spatially separates a light beam emitted from the light emitting device into an ordinary beam with polarization perpendicular to the anisotropic axis and an extraordinary beam with polarization including a component of the anisotropic axis and the optical fiber receives either of the ordinary beam and the extraordinary beam into the core as a propagating beam.

6.  A light source module as claimed in claim 5, wherein the inclination angle $\alpha$ of the anisotropic axis to the entrance surface is between 25 degrees and 65 degrees, and a thickness t of the birefringent crystal, a refractive index $n_o$ of ordinary ray, a refractive index $n_e$ of extraordinary ray and a core diameter $D_f$ of the fibers satisfy an inequality $|(n_e-n_o)| t \sin 2\alpha / n_k > D_f$, where $n_k = n_o \cos^2\alpha + n_e \sin^2\alpha$.

7.  A light source module as claimed in claim 6, wherein the birefringent crystal is quartz, $LiNbO_3$, KDP, $TiO_2$ or calcite.

8.  A light source module as claimed in claim 7, wherein the inclination angel $\alpha$ is an angle from 35 degrees to 55 degrees.

9. A light source module comprising a light source having a package, a cap with a window, a light emitting device for emitting light beams and a monitoring photodiode for monitoring the power of the light emitting device, a lens holder supporting the light source at one end, a lens installed in the lens holder for converging the beams emitted from the light emitting device, a plane birefringent crystal fixed in the lens holder with parallel surfaces and an anisotropic axis inclining to the surfaces at an angle $\alpha$ between 25 degrees and 65 degrees, a receptacle mounted on another end of the lens holder for attaching or detaching a ferrule fitted on an end of an optical fiber to or from the lens holder, wherein the plane birefringent crystal spatially separate light beams emitted from the light emitting device into ordinary beams with polarization perpendicular to the anisotropic axis and extraordinary beams with polarization including a component of the anisotropic axis, a thickness t of the birefringent crystal, a refractive index $n_o$ of ordinary ray, a refractive index $n_e$ of extraordinary ray and a core diameter $D_f$ of the fibers satisfy an inequality $|(n_e-n_o)|t \sin 2\alpha/n_k > D_f$ where $n_k = n_o \cos^2\alpha + n_e \sin^2\alpha$, and the optical fiber receives either of the ordinary beam and the extraordinary beam into the core as a propagating beam.

10. A light source module as claimed in claim 9, wherein the lens lies nearer to the light emitting device than the plane birefringent crystal and the birefringent crystal separates the beams converged by the lens into ordinary beams and extraordinary beams.

11. A light source module as claimed in claim 9, wherein the lens lies farther from the light emitting device than the plane birefringent crystal and the separated extraordinary beams an the ordinary beams are individually converged by the lens.

12. A light source module as claimed in claim in 9, wherein the lens has an effective, central part and a non-effective, peripheral part, a pinhole plate having a pinhole is interposed between the light emitting device and the lens for preventing the beams emanated from the light emitting device from passing the non-effective, peripheral part of the lens, and the solid angle $d\omega_2$ of a cone projecting from the center of the light emitting device to the pinhole is smaller than the solid angle $d\omega_1$ of another cone projecting from the center of the light emitting device to the effective part of the lens.

13. A light source module as claimed in claim 12, wherein an antireflection film is coated at least on a part of the inner wall of the cap which would be irradiated by the light emanated in all direction from the light emitting device.

14. A light source module as claimed in claim in 9, wherein the lens has an effective, central part and a non-effective, peripheral part, the cap of the light source has a pinhole window for preventing the beams emanated from the light emitting device from passing the non-effective, peripheral part of the lens, and the solid angle $d\omega_2$ of a cone projecting from the center of the light emitting device to the pinhole window is smaller than the solid angle $d\omega_1$ of another cone projecting from the center of the light emitting device to the effective part of the lens.

15. A light source module as claimed in claim in 9, wherein the lens has an effective, central part and a non-effective, peripheral part and the no-effective part of the lens is treated by antireflection and antiransparency coating.

16. A fiber-optic gyroscope comprising a light source having a light emitting device for emitting monochromatic or quasimonochromatic light beams and a photodetector for monitoring the power of the light emitting device, a birefringent crystal positioned on the beam line defined by the light emitting device and having an anisotropic axis which is not perpendicular to the beam line nor parallel with the beam line for separating spatially the beams into extraordinary beams and ordinary beams, an optical fiber disposed in front of the birefringent crystal for selectively receive either an extraordinary beam or an ordinary beam from the birefringent crystal, a coupler provided in the fiber for dividing or integrating beams, a fiber coil produced by winding a single-mode fiber in a coil and connecting both ends to the coupler for guiding beams clockwise and counterclockwise, wherein the beams emanated from the light emitting device are separated into extraordinary beams and ordinary beams by the birefringent crystal, only one beam of the extraordinary beams and the ordinary beams is received by the optical fiber as a propagating beam, the beam is divided in half by the coupler, the divided beams travel in the fiber coil clockwise and counterclockwise and are unified by the coupler, the unified beams pass the birefringent crystal, reach the light emitting device and interfere with each other, and the angular velocity of the fiber coil is deduced from the driving current of the light emitting device at a constant driving voltage, from the driving voltage at a constant driving current or from the photocurrent of the monitoring photodetector at a constant driving current or voltage.

17. A fiber-optic gyroscope as claimed in claim 16, wherein a phase modulator is equipped at an end of the fiber coil for modulating the phase of the light wave progressing there.

18. A fiber-optic gyroscope as claimed in claim 17, wherein a depolarizer is interposed at an end of the fiber coil for depolarizing the light wave progressing there.

19. A fiber-optic gyroscope as claimed in claim 16, wherein the inclination angle $\alpha$ of the anisotropic axis to the beam line is an angle between 25 degrees and 65 degrees, and a thickness $t$ of the birefringent crystal, a refractive index $n_o$ of ordinary ray, a refractive index $n_e$ of extraordinary ray and a core diameter $D_f$ of the fibers satisfy an inequality $|(n_e-n_o)| t \sin 2\alpha/n_k > D_f$, where $n_k = n_o\cos^2\alpha + n_e\sin^2\alpha$.

20. A fiber-optic gyroscope as claimed in claim 16, wherein the birefringent crystal is quartz, $LiNbO_3$, KDP, $TiO_2$ or calcite.

21. A fiber-optic gyroscope as claimed in claim 16, wherein the light source and the birefringent crystal are integrated in a light source module.

22. A fiber-optic gyroscope as claimed in claim 19, wherein the light source module comprising the light source having a package, a cap with a window, a light emitting device for emitting light beams and a monitoring photodiode for monitoring the power of the light emitting device, a lens holder supporting the light source at one end, a lens installed in the lens holder for converging the beams emitted from the light emitting device, the plane birefringent crystal fixed in the lens holder with parallel surfaces and an anisotropic axis inclining to the surfaces at an angle $\alpha$ between 25 degrees and 65 degrees, a receptacle mounted on another end of the lens holder for attaching or detaching a ferrule fitted on an end of an optical fiber to or from the lens holder.

23. A fiber-optic gyroscope as claimed in claim 22, wherein the lens has an effective, central part and a non-effective, peripheral part, a pinhole plate having a pinhole is interposed between the light emitting device and the lens for preventing the beams emanated from the light emitting device from passing the non-effective, peripheral part of the lens, and the solid angle $d\omega_2$ of a cone projecting from the center of the light emitting device to the pinhole is smaller than the solid angle $d\omega_1$ of another cone projecting from the center of the light emitting device to the effective part of the lens.

24. A fiber-optic gyroscope as claimed in claim 22, wherein an antireflection film is coated at least on a part of the inner wall of the cap which would be irradiated by the light emanated from the light emitting device.

25. A fiber-optic gyroscope as claimed in claim 22, wherein the lens has an effective, central part and a non-effective, peripheral part, the cap of the light source has a pinhole window for preventing the beams emanated from the light emitting device from passing the non-effective, peripheral part of the lens, and the solid angle $d\omega_2$ of a cone projecting from the center of the light emitting device to the pinhole window is smaller than the solid angle $d\omega_1$ of another cone projecting from the center of the light emitting device to the effective part of the lens.

26. A fiber-optic gyroscope as claimed in claim 22, wherein the lens has an effective, central part and a non-effective, peripheral part and the no-effective part of the lens is treated by antireflection and anitransparency coating.

**FIG. 1**    *PRIOR ART*

fiber-type polarizer

light source 1

3

depolarizer
8

depolarizer
7

coupler 2

coupler 4

fiber coil
5

phase-modulator 6

9
photodetector

**FIG. 2**    *PRIOR ART*

fiber-type polarizer

light source 1

depolarizer 7

3

depolarizer
8

19'
monitoring photodetector

coupler 4

fiber coil
5

phase-modulator 6

EP 0 636 861 A1

# F I G. 3 (1)

# F I G. 3 (2)

# FIG. 4

d: separation width

t: thickness

$n_o$: refractive index of ordinary ray

$n_e$: refractive index of extraordinary ray

$$d = t \times \frac{\left| n_e^2 - n_o^2 \right|}{2\, n_o\, n_e}$$

optical axis

# *FIG. 5*

optical principal axis

Y Z

X

incident beam

extraordinary beam

ordinary beam

# *FIG. 6*

optical axis

Y Z

X

extraordinary beam

light source

lens

ordinary beam

optical fiber

birefringent material

# F I G. 7

ordinary beams

extraordinary beams

core

lens

birefringent material

optical fiber

# F I G.14

ball lens (quartz)
**48**

**39**

optical fiber

**46**

**45**
SUS ferrule

**47**

**40**
lens holder

**41**
superluminescent diode

# F I G. 8

entrance surface

exit surface

extraordinary ray

d

ordinary ray

optical principal axis

birefringent material

# F I G. 9

entrance surface

$\theta$

exit surface

extraordinary ray

d

ordinary ray

optical principal axis

birefringent material

# F I G.10

light source
**1**

lens
**12**

phase modulator
**6**

**19**

light emitting
device
**11**

**13**
birefringent
material

fiber **14**

fiber **4**
coupler

**5**
fiber coil

# F I G.13

light source module
**39**

**40**

**47**

depolarizer
**8**

**46**

**45**

**44**

fiber **4**
coupler

**5**
fiber coil

**41**

**42**

**43**

**6**

phase modulator

# F I G. 11

optical fiber
**31**

birefringent material (quartz)
**33**

optical fiber
**32**

mold **34**

# F I G. 12

monitoring
photodiode
**46**

refractive index distributing lens
**42**

optical fiber
**44**

superluminescent
diode **41**

**45**
SUS ferrule

**47**
receptacle

**43**
birefringent material (quartz)

**40**
lens holder

**39**
light source module

# F I G. 15

light source

lens

extraordinary beam or
ordinary beam

monitoring
photodiode

light emitting
device

birefringent
crystal

optical fiber

# F I G. 16

advance

light source

optical fiber

monitoring
photodiode

lens

light emitting
device

birefringent material

# F I G. 17

return

light source

optical fiber

lens

birefringent material

# F I G.18 (1)

# F I G.18 (2)

When beam aperture differs.

optical fiber

birefringent material

lens

light source

optical fiber

birefringent material

lens

light source

# F I G.19 (1)

# F I G.19 (2)

When emitting spot differs.

optical fiber

birefringent material

lens

light source

optical fiber

birefringent material

lens

light source

# F I G.20

light source

lens

optical fiber

monitoring
photodiode

stray rays

birefringent crystal

# F I G.21

light emitting device

birefringent crystal

$d\omega_1$

$d\omega_2$

pinhole

lens

optical fiber

# F I G.22

light emitting device

birefringent crystal

$d\omega_1$

$d\omega_2$

pinhole

lens

optical fiber

# FIG.23  advance

light source

lens

optical fiber

$D_2$  $D_1$

monitoring photodiode

light emitting
device

birefringent crystal

# FIG.24  return

light source

lens

optical fiber

monitoring photodiode

light emitting
device

stray rays

birefringent crystal

# FIG.25

51

52

58

57  59  53  54  55

56

# F I G. 26

# F I G. 27

| | European Patent Office | EUROPEAN SEARCH REPORT | Application Number EP 94 30 5660 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 586 242 (SUMITOMO ELECTRIC INDUSTRIES LTD) <br> * figures 35-38 * | 1-26 | G01C19/72 <br> G02B6/34 <br> G02B6/42 |
| X | EP-A-0 404 052 (FUJITSU LTD) <br> * column 6, line 7 - line 30; figures 2,6C * <br> * column 10, line 24 - line 31 * | 1 | |
| X <br> A | US-A-5 062 117 (D.W. ANTHON) <br> * the whole document * | 5 <br> 6,8,9 | |
| X | EP-A-0 492 650 (OKI ELECTRIC INDUSTRY CO. LTD.) <br> * column 5, line 2 - column 6, line 30; figure 3 * | 1,3,4 | |
| A | DE-A-37 42 201 (TELDIX GMBH) <br> * the whole document * | 16 | |
| A | PATENT ABSTRACTS OF JAPAN <br> vol. 9, no. 320 (P-413) 14 December 1985 <br> & JP-A-60 146 216 (KOGYO GIJUTSUIN) 1 August 1985 <br> * abstract * | 1 | TECHNICAL FIELDS SEARCHED (Int.Cl.6) <br> G01C <br> G02B |
| A | PATENT ABSTRACTS OF JAPAN <br> vol. 5, no. 150 (P-081) 22 September 1981 <br> & JP-A-56 083 701 (NIPPON TELEGRAPH & TELEPH CORP) 8 July 1981 <br> * abstract * | 1 | |

-/--

The present search report has been drawn up for all claims

| Place of search | Date of completion of the search | Examiner |
|---|---|---|
| THE HAGUE | 22 November 1994 | Hunt, J |

European Patent Office

# EUROPEAN SEARCH REPORT

Application Number

EP 94 30 5660

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | OPTICAL FIBER COMMUNICATION CONFERENCE AND SIXTH INTERNATIONAL CONFERENCE ON INTEGRATED OPTICS AND OPTICAL FIBER COMMUNICATION, January 1987, RENO, NEVADA, USA<br>page 80<br>EMKEY ET AL 'SINGLE-MODE POLARIZATION SELECTIVE COUPLER USING FIBER LENSES.'<br>* the whole document * | 1 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 22 November 1994 | Hunt, J |